# EUROPÄISCHE PATENTSCHRIFT

(11) **EP 3 947 016 B1**
(45) Veröffentlichungstag und Bekanntmachung des Hinweises auf die Patenterteilung: **22.03.2023**
(21) Anmeldenummer: 20718197.5
(22) Anmeldetag: 27.03.2020
(51) Int. Cl.: B60L 5/20, B60L 5/22, B60L 9/00, B60L 5/04, B60L 5/19, B60L 5/06

(54) **STROMABNEHMER FÜR EIN SCHIENENFAHRZEUG**
CURRENT COLLECTOR FOR A RAIL VEHICLE
COLLECTEUR DE COURANT POUR UN VÉHICULE FERROVIAIRE

(30) Priorität: 15.05.2019 DE 102019207018
(43) Veröffentlichungstag der Anmeldung: 09.02.2022
(73) Patentinhaber: Siemens Mobility GmbH, 81739 München (DE)
(72) Erfinder: PLABST, Roland, 82239 Alling (DE)
(74) Vertreter: Siemens Patent Attorneys
(86) Internationale Anmeldenummer: PCT/EP2020/058668
(87) Internationale Veröffentlichungsnummer: WO 2020/229042

(56) Entgegenhaltungen:
- WO-A1-2019/056412
- DE-A1-102012 108 492
- DE-A1-102012 213 460
- DE-A1-102013 201 534
- DE-A1-102013 219 227
- DE-C- 112 160

## Beschreibung

Die Erfindung betrifft einen Stromabnehmer für ein Schienenfahrzeug.

Schienenfahrzeuge mit einem Elektroantrieb oder Hybrid-Schienenfahrzeuge, die über eine Kombination aus Elektroantrieb und einem weiteren Antrieb verfügen, beziehen ihre elektrische Energie aus einer Oberleitung bzw. aus einem Fahrdraht, der oberhalb einer Fahrstrecke des Schienenfahrzeugs verspannt ist.

Das Schienenfahrzeug ist dazu mit einem bügelförmigen Schleifleisten-Stromabnehmer ausgestattet, durch den die elektrische Energie von der Fahrleitung abgegriffen wird, um letztlich dem Elektroantrieb des Schienenfahrzeugs zugeführt zu werden.

Dabei wird eine Schleifleiste durch einen Scherenmechanismus von unten gegen den Fahrdraht gedrückt und während der Fahrt an dieser entlanggeführt. Der Fahrdraht ist längs der Schienenstrecke zick-zack-förmig über dieser angeordnet, so dass die Schleifleiste gleichmäßig abgenutzt wird.

Es sind auch Rollenstromabnehmer bekannt, die insbesondere beim Betrieb von Straßenbahnen Verwendung finden. Der Rollenstromabnehmer weist dabei eine Stromabnehmerrolle, kurz Rolle, auf. In der Mitte der Rolle ist eine umlaufende Nut bzw. Rille vorgesehen, in der für eine sichere Energieübertragung die Oberleitung dauerhaft verlaufen muss.

Rollenstromabnehmer bestehen heute meist aus einer langen Stange, die schräg auf dem Fahrzeugdach montiert ist, wobei die Stange die Rolle über eine Feder nach oben drückt. Am oberen Ende der Stange befindet sich eine bevorzugt aus Messing bestehende Rolle mit Rille bzw. Nut entlang des Umfangs der Rolle. Die Rolle wird von unten am Fahrdraht entlanggerollt bzw. entlanggeführt, um den elektrischen Kontakt herzustellen. Ein relativ geringer Durchmesser der Rolle führt bei schnell fahrenden Fahrzeugen zu erheblichen Drehzahlen der Rolle und damit zu verstärktem Materialverschleiß.

Zur Verbesserung der Kontaktsituation sind Rollenstromabnehmer bekannt, die je ein Gelenk am Stangenfuß und an der Stangenspitze aufweisen, so dass die Rolle mit Bezug zum Wagendach drehbar gelagert ist und die Rolle an der Stangenspitze zusätzlich noch um eine vertikale Achse drehbar ist.

Aus der Patentschrift (DE) 112 160 des kaiserlichen Patentamts ist ein Stromabnehmer für elektrische Bahnen mit zwei Walzenpaaren bekannt.

Es ist die Aufgabe der vorliegenden Erfindung, einen verbesserten Stromabnehmer für ein Schienenfahrzeug bereitzustellen.

Diese Aufgabe wird durch die Merkmale des Anspruchs 1 gelöst. Vorteilhafte Weiterbildungen sind in den abhängigen Ansprüchen angegeben.

Die Erfindung betrifft einen Stromabnehmer für ein Schienenfahrzeug mit einer elektrisch leitenden Kontakteinrichtung und mit einem Hebemechanismus.

Die Kontakteinrichtung ist zur Energieübertragung zwischen einem Fahrdraht, der oberhalb eines Schienenwegs des Schienenfahrzeugs angeordnet ist, und Komponenten des Schienenfahrzeugs ausgebildet. Der Hebemechanismus ist dachseitig auf dem Schienenfahrzeug angeordnet und trägt die Kontakteinrichtung derart, dass die Kontakteinrichtung von unten her gegen den Fahrdraht zur Energieübertragung gedrückt wird.

Die Kontakteinrichtung weist eine Länge auf, die einer länderspezifisch vorgegebenen Länge einer Schleifleiste eines Schleifleisten-basierten Stromabnehmers entspricht.

Die Kontakteinrichtung ist als drehbar gelagerte Walze ausgestaltet, wobei die Walze während der Fahrt des Schienenfahrzeugs zur Herstellung eines elektrischen Kontakts von unten her am Fahrdraht entlangrollt.

In einer bevorzugten Ausgestaltung ist die drehbar gelagerte, elektrisch leitende Walze aus Messing gefertigt.

In einer bevorzugten Ausgestaltung weist die drehbar gelagerte Walze einen möglichst geringen Durchmesser auf. Dies wird insbesondere aus Gewichtsgründen bedingt.

Das Verhältnis Walzendurchmesser zur Walzenlänge ergibt sich insbesondere durch Konturen, die gemäß den relevanten Normen in bestimmten Ländern gefordert sind.

Die sich ergebende Drehzahl der Walze ist in erster Linie vom Walzendurchmesser und der Fahrgeschwindigkeit abhängig. Bei einem schnellfahrenden Schienenfahrzeug ergibt sich bei einer Geschwindigkeit von 200 km/h und einem angenommenen Walzenaußendurchmesser von 60 mm und einer Walzenlänge von 1950 mm eine theoretische Drehzahl der Walze von circa 17700 U/min.

In einer bevorzugten Ausgestaltung ist die drehbar gelagerte Walze als Zylinder ausgebildet.

In einer bevorzugten Ausgestaltung weist die drehbar gelagerte Walze in ihrer Mitte eine Verdickung im Durchmesser auf. Diese Verdickung ist eine Konsequenz aus den durch nationale Normen geforderten Konturen.

In einer bevorzugten Ausgestaltung ist die Walze, bedingt durch hohe Drehzahlen, luftgelagert, jedoch sind auch andere Lagerungsarten denkbar.

Im Stromabnehmer der Erfindung dreht sich die Walze um eine feststehende Achse, die bevorzugt aus Stahl ist.

Im Stromabnehmer der Erfindung ist die feststehende Achse axial hohlgebohrt und weist in radialer Richtung umlaufend Bohrungen bzw. Düsen für die benötigte Luftlagerung auf.

In einer bevorzugten Ausgestaltung sind diese Bohrungen bzw. Düsen als Laser-gebohrte Mikrodüsen ausgeführt.

Im Stromabnehmer der Erfindung sind diese Bohrungen bzw. Düsen derart angeordnet, dass in die Hohlachse eingeblasene Luft nur an Walzenstirnflächen ausströmt.

In einer bevorzugten Ausgestaltung wird ein Luftspalt, der zwischen der Walzenstirnfläche und der Walzenhalterung, die bevorzugt als U-förmige Gabel ausgestaltet ist, angeordnet ist, durch Einsetzen von Passscheiben minimiert.

Damit wird erreicht, dass die Walze nicht nur in radialer Richtung, sondern auch in axialer Richtung geführt ist. Dadurch wird eine aerodynamische Einspannung der Walze in beiden Richtungen realisiert.

In einer bevorzugten Ausgestaltung sind am Anfang und am Ende der Walze jeweils umfangseitig Bürsten zur Stromübertragung angeordnet. Diese sind notwendig, um den Strom sicher von der Walze auf den Walzen-tragenden Rahmen zu übertragen. In einer bevorzugten Ausführung bestehen diese Bürsten aus federbelasteten Kohlewerkstoffen.

In einer bevorzugten Ausgestaltung kommt beim Hebemechanismus das etablierte Einholmkonzept (mit Kniegelenk, Ober- und Unterarm) zum Einsatz. Am Kniegelenk und bei der Befestigung am Fahrzeugdach sind die beiden Arme drehbar gelagert. Eine U-förmige Gabel, die die Walze bzw. die feststehende Achse hält, ist fest mit dem Oberarm verbunden.

Zusätzlich werden zum Heben und Senken entweder zwei Druckluftzylinder (an beiden Ende des Unterarms) oder ein Druckluftzylinder und ein Gestänge zur Kraftübertragung (an die beiden Armen) benötigt.

Die vorliegende Erfindung vereint die Vorteile des Rollenstromabnehmers und die Vorteile des Schleifleisten-Stromabnehmers.

Die relativ filigrane Wippenkonstruktion eines Standard-Schleifleisten-basierten Stromabnehmers wird durch eine robuste Konstruktion ersetzt.

Ein weiterer Vorteil ist, dass bedingt durch die Rollbewegung der Stromabnehmer-Walze auf redundante Kontaktstellen bzw. Schleifleisten pro Stromabnehmer und die damit verbundene, bislang benötigte Wippenkonstruktion verzichtet wird.

Dadurch, dass pro Stromabnehmer nur eine fest mit dem Stromabnehmerarm verbundene Walze vorhanden ist, kann auch ein bislang benötigter Viergelenkmechanismus zur Parallelführung der Wippe entfallen.

Die vorliegende Erfindung ermöglicht dadurch, dass im Vergleich zum bislang bekannten Stand der Technik mehr Platz auf dem Dach des Schienenfahrzeugs zur Verfügung steht.

Zusätzlich verringern sich die Längen der Schutzstrecken auf dem Dach, die für Trennstellen in der Oberleitung bei Netzwechseln benötigt werden: bei einem konventionellen Stromabnehmer ist der Abstand zwischen einer hinteren Schleifleiste eines vorderen Stromabnehmers zur vorderen Schleifleiste eines hinteren Stromabnehmers kleiner als zwischen zwei Rollen gemäß der Erfindung (gerechnet in Fahrzeuglängsrichtung mit zwei Stromabnehmern pro Fahrzeug).

Durch die vorliegende Erfindung wird ein Stromabnehmer realisiert, der robust, standfest, Gewichts- und Bauraum-optimiert ist.

Durch die vorliegende Erfindung, die auf einer elektrisch leitenden, drehbaren Walze beruht und hier insbesondere durch die Rollbewegung, wird Verschleiß reduziert.

Durch die vorliegende Erfindung werden Unstetigkeiten im Verlauf der Oberleitung bzw. des Fahrdrahts tolerierbar.

Durch die erfindungsgemäße Luftlagerung wird eine nahezu verschleißfreie Lagerung der Walze erreicht - die Lagerungspartner sind durch einen dünnen Luftspalt voneinander getrennt, der typischerweise im Bereich von 5 um bis 10 um liegt.

Die erfindungsgemäße Luftlagerung der Walze ist leicht realisierbar, da heutige Schienenfahrzeuge eine Druckluftversorgung für das Bremssystem aufweisen.

Durch die erfindungsgemäße Luftlagerung, die auch aus dem Präzisionsmaschinenbau (Mess- und Bearbeitungsmaschinen) bekannt ist und die bei schnell-laufenden Maschinen (Hochgeschwindigkeitsspindeln) verwendet wird, sind Drehzahlen bis zu 300 000 U/min beherrschbar.

Durch die erfindungsgemäße Ausgestaltung der Bohrungen bzw. Düsen als Laser-gebohrte Mikrodüsen wird eine sehr effiziente Luftlagerung ermöglicht. Daraus resultieren einzigartige technische Lagereigenschaften (z.B. hohe Tragkraft, hohe Steifigkeit, geringe Dämpfungen, usw.) und ein optimierter Luftverbrauch.

Über die Variation der Düsengröße, die lasergebohrt typischerweise Durchmesser im Bereich von 0,02 mm bis 0,06 mm aufweisen, über die Lage der Mikrodüsen und über ihre Verteilung können die statischen und dynamischen Lagereigenschaften für jede Anwendung optimal und unabhängig voneinander aufeinander abgestimmt werden.

Durch die erfindungsgemäße Paarung von Messing für die Walze und Stahl für die feststehende Achse wird eine gewisse Notlaufeigenschaft (z.B. für den Fall von fehlender Druckluft) des Lagers realisiert, da Messing bzw. Messing-Legierungen auch Gleitlager-Eigenschaften besitzen.

Nachfolgend wird die vorliegende Erfindung beispielhaft anhand einer Zeichnung näher erläutert. Dabei zeigt:
- FIG 1: eine prinzipielle Übersicht einer Ausgestaltung des erfindungsgemäßen Stromabnehmers, und
- FIG 2: einen bevorzugten Hebemechanismus für den erfindungsgemäßen Stromabnehmer.

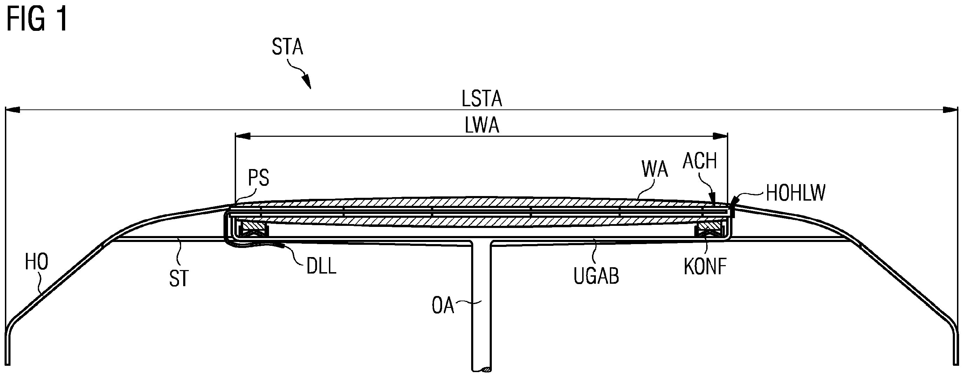

FIG 1 zeigt eine prinzipielle Übersicht einer Ausgestaltung des erfindungsgemäßen Stromabnehmers STA.

Dabei ist der Stromabnehmer STA beispielhaft gemäß der DIN EN 50367 ausgestaltet und entspricht damit einer länderspezifisch vorgegebenen Länge einer Schleifleiste eines Schleifleisten-basierten Stromabnehmers.

Entsprechend weist der Stromabnehmer STA eine Breite LSTA von 1950 mm auf. Eine zugehörige Walze WA weist als Kontakteinrichtung eine Breite LWA von 1000 mm auf.

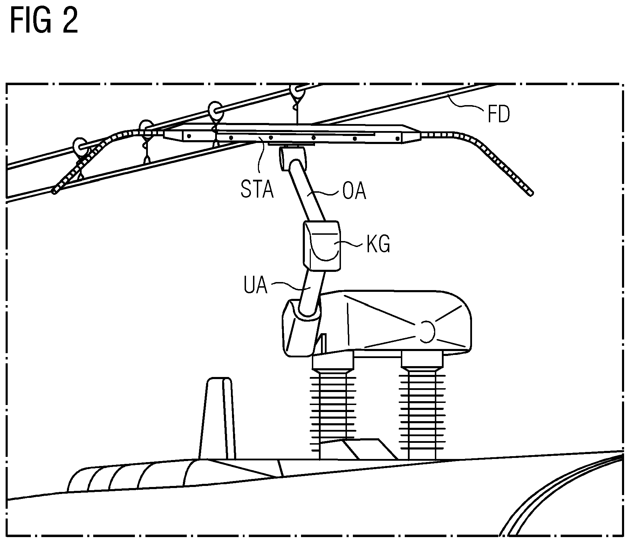

Ein in der FIG 2 näher beschriebener Oberarm OA eines Hebemechanismus, der dachseitig auf dem Schienenfahrzeug angeordnet ist, trägt eine Walze WA als Kontakteinrichtung derart, dass die Walze WA von unten her gegen einen Fahrdraht zur Energieübertragung gedrückt wird.

Die Walze WA ist drehbar gelagert, so dass die Walze WA während der Fahrt des Schienenfahrzeugs zur Herstellung eines elektrischen Kontakts von unten her am Fahrdraht entlangrollt.

Die Walze WA ist zylinderförmig ausgestaltet und weist in ihrem mittleren Bereich radial umlaufend eine Verdickung bzw. einen Bauch auf. Mit anderen Worten ist dieser mittlere Bereich nach außen hin radial umlaufend verdickt.

Der Oberarm OA ist mit einer U-förmigen Gabel UGAB verbunden. Diese Gabel UGAB ist bevorzugt aus einem T-förmigen Profil gefertigt.

Teil der U-förmigen Gabel UGAB ist eine feststehende Achse ACH, die bevorzugt aus Stahl gefertigt ist. Auf dieser Achse ACH ist die Walze WA drehbar gelagert.

Die feststehende Achse ACH ist axial hohlgebohrt, so dass diese eine Hohlwelle bzw. Hohlachse HOHLW bildet.

In radialer Richtung umlaufend weist die Achse ACH bzw. die Hohlachse HOHLW Bohrungen bzw. Düsen auf, über die eine Luftlagerung der Walze WA realisiert wird.

Diese Bohrungen bzw. Düsen sind als Laser-gebohrte Mikrodüsen ausgebildet und bevorzugt derart angeordnet, dass in die Hohlachse HOHLW über eine Druckluftleitung DLL eingeblasene Luft nur im Bereich der Walzenstirnflächen ausströmt.

Die Druckluftleitung DLL ist dabei elektrisch nichtleitend ausgebildet.

Ein Luftspalt, der zwischen einer Walzenstirnfläche und der U-förmigen Gabel bzw. Walzenhalterung vorhanden ist, wird durch Einsetzen einer Passscheibe PS minimiert.

An beiden Enden der Walze WA ist diese über elektrisch leitende Kontaktstücke KONF mit der U-förmigen Gabel UGAB elektrisch verbunden, um die von der Walze WA aus dem Fahrdraht entnommene elektrische Energie zum Oberarm OA zu übertragen.

Die Kontaktstücke KONF sind bevorzugt federnd auf der U-förmigen Gabel UGAB angeordnet.

Die U-förmige Gabel UGAB ist über eine Strebe ST mit einem Holm HO, der aus einem isolierenden Werkstoff gefertigt ist, verbunden.

FIG 2 zeigt mit Bezug auf FIG 1 einen bevorzugten Hebemechanismus für den erfindungsgemäßen Stromabnehmer, wobei es sich hier um das etablierte Einholmkonzept mit Kniegelenk KG, Oberarm OA und Unterarm UA handelt.

Der Unterarm UA ist mit einem ersten Ende isoliert mit einem Dach eines Schienenfahrzeugs verbunden. Mit einem zweiten Ende ist der Unterarm UA über das Kniegelenk KG mit einem ersten Ende des Oberarm OA verbunden. Ein zweites Ende des Oberarms OA trägt den erfindungsgemäßen Stromabnehmer STA und presst diesen von unten her an einen Fahrdraht FD, der über dem Schienenfahrzeug und längs dessen Fahrstrecke angeordnet ist.

Der Unterarm UA ist drehbar gelagert mit dem Kniegelenk KG verbunden, zusätzlich ist der Unterarm UA im Bereich des Fahrzeugdachs drehbar gelagert und mit diesem isoliert verbunden.

Der Oberarm OA trägt über eine U-förmige Gabel die Walze bzw. die feststehende Achse, auf der sich die Walze dreht.

Zum Heben und Senken des Stromabnehmers STA werden beispielsweise Druckluftzylinder verwendet, die eine Bewegung des Unterarms UA im Bezug zum Fahrzeugdach ermöglichen.

## Patentansprüche

1. Stromabnehmer (STA) für ein Schienenfahrzeug,
- mit einer elektrisch leitenden Kontakteinrichtung (WA), die zur Energieübertragung zwischen einem Fahrdraht (FD), der oberhalb eines Schienenwegs des Schienenfahrzeugs angeordnet ist, und Komponenten des Schienenfahrzeugs ausgebildet ist,
- mit einem Hebemechanismus (KG, OA, UA), der dachseitig auf dem Schienenfahrzeug anordenbar ist und die Kontakteinrichtung (WA) derart trägt, dass die Kontakteinrichtung (WA) von unten her gegen den Fahrdraht (FD) zur Energieübertragung gedrückt wird,
- bei dem die Kontakteinrichtung (WA) eine Länge (LWA) aufweist, die einer länderspezifisch vorgegebenen Länge einer Schleifleiste eines Schleifleisten-basierten Stromabnehmers (STA) entspricht,
- bei dem die Kontakteinrichtung (WA) als drehbar gelagerte Walze (WA) ausgestaltet ist, wobei die Walze während der Fahrt des Schienenfahrzeugs zur Herstellung eines elektrischen Kontakts von unten her am Fahrdraht (FD) entlangrollt,
- bei dem die elektrisch leitende Walze um eine feststehende Achse (ACH) drehbar gelagert ist, **dadurch gekennzeichnet, dass**
- bei dem die drehbar gelagerte, elektrisch leitende Walze luftgelagert ist,
- bei dem die feststehende Achse (ACH) axial hohlgebohrt ist und in radialer Richtung umlaufend Bohrungen bzw. Düsen für die Luftlagerung aufweist, und
- bei dem die Bohrungen bzw. Düsen derart angeordnet sind, dass in die Hohlachse (HOLW) eingeblasene Luft nur im Bereich der Walzenstirnflächen ausströmt.

2. Stromabnehmer nach Anspruch 1, bei dem die drehbar gelagerte, elektrisch leitende Walze aus Messing gefertigt ist.

3. Stromabnehmer nach Anspruch 1, bei dem die drehbar gelagerte, elektrisch leitende Walze als Zylinder ausgebildet ist.

4. Stromabnehmer nach Anspruch 1, bei dem die drehbar gelagerte, elektrisch leitende Walze im Bereich ihrer Mitte eine Verdickung im Durchmesser aufweist.

5. Stromabnehmer nach Anspruch 1, bei dem die feststehende Achse aus Stahl ist.

6. Stromabnehmer nach Anspruch 1, bei dem die Bohrungen bzw. Düsen als Laser-gebohrte Mikrodüsen ausgebildet sind.

7. Stromabnehmer nach einem der vorhergehenden Ansprüche, bei dem ein Luftspalt zwischen einer Walzenstirnfläche und einer Walzenhalterung, die bevorzugt als U-förmige Gabel ausgestaltet ist, durch Einsetzen von Passscheiben minimiert ist.

8. Stromabnehmer nach einem der vorhergehenden Ansprüche, bei dem der Hebemechanismus gemäß dem Einholmkonzept ausgebildet ist.

## Claims

1. Current collector (STA) for a rail vehicle,
- having an electrically conducting contact installation (WA) which is configured to transmit energy between a catenary wire (FD), which is disposed above a permanent way of the rail vehicle, and components of the rail vehicle;
- having a lifting mechanism (KG, OA, UA) which is able to be disposed on the roof on the rail vehicle and supports the contact installation (WA) in such a manner that the contact installation (WA) for transmitting energy is pressed against the catenary wire (FD) from below;
- in which the contact installation (WA) has a length (LWA) which corresponds to a country-specifically predefined length of a contact strip of a contact strip-based current collector (STA);
- in which the contact installation (WA) is designed as a rotatably mounted roller (WA), wherein the roller during the travel of the rail vehicle, for establishing electrical contact, rolls along the catenary wire (FD) from below;
- in which the electrically conducting roller is mounted so as to be rotatable about a stationary axle (ACH),
**characterized in that**
- in which the rotatably mounted, electrically conducting roller is on air bearings;
- in which the stationary axle (ACH) is bored so as to be axially hollow, and in the radial direction in an encircling manner has bores or nozzles, respectively, for the air bearings; and
- in which the bores or nozzles, respectively, are disposed in such a manner that air blown into the hollow axle (HOLW) flows out only in the region of the roller end faces.

2. Current collector according to Claim 1, in which the rotatably mounted, electrically conducting roller is made from brass.

3. Current collector according to Claim 1, in which the rotatably mounted, electrically conducting roller is configured as a cylinder.

4. Current collector according to Claim 1, in which the rotatably mounted, electrically conducting roller in the region of the centre thereof has a thickening in the diameter.

5. Current collector according to Claim 1, in which the stationary axle is of steel.

6. Current collector according to Claim 1, in which the bores or nozzles, respectively, are configured as laser-bored micro nozzles.

7. Current collector according to one of the preceding claims, in which an air gap between a roller end face and a roller mounting, which is preferably designed as a U-shaped fork, is minimized by inserting shim discs.

8. Current collector according to one of the preceding claims, in which the lifting mechanism is configured according to the single-arm concept.

## Revendications

1. Pantographe (STA) pour un véhicule ferroviaire,
- avec un dispositif de contact électriquement conducteur (WA) qui est réalisé pour un transfert d'énergie entre un fil caténaire (FD) qui est disposé au-dessus d'un chemin de fer du véhicule ferroviaire et des composants du véhicule ferroviaire,
- avec un mécanisme de levage (KG, OA, UA) qui peut être disposé côté toit sur le véhicule ferroviaire et qui supporte le dispositif de contact (WA) de telle sorte que le dispositif de contact (WA) est appuyé par le bas contre le fil caténaire (FD) pour le transfert d'énergie,
- dans lequel le dispositif de contact (WA) présente une longueur (LWA) qui correspond à une longueur prédéterminée spécifique au pays d'une bande de frottement d'un pantographe à base de bandes de frottement (STA),
- dans lequel le dispositif de contact (WA) est conçu en tant que rouleau monté de manière pivotante (WA), dans lequel le rouleau pendant le parcours du véhicule ferroviaire pour la production d'un contact électrique roule depuis le bas au niveau du fil caténaire (FD),
- dans lequel le rouleau électriquement conducteur est monté de manière pivotante autour d'un axe fixe (ACH), **caractérisé en ce que**
- dans lequel le rouleau électriquement conducteur monté de manière pivotante est monté sur coussin d'air,
- dans lequel l'axe fixe (ACH) est axialement creux et présente dans la direction radiale sur la circonférence des alésages ou des buses pour la suspension pneumatique, et
- dans lequel les alésages ou les buses sont disposés de telle sorte que de l'air soufflé dans l'axe creux (HOLW) ne circule que dans la zone des surfaces avant de rouleau.

2. Pantographe selon la revendication 1, dans lequel le rouleau électriquement conducteur monté de manière pivotante est fabriqué à partir de laiton.

3. Pantographe selon la revendication 1, dans lequel le rouleau électriquement conducteur monté de manière pivotante est réalisé en tant que cylindre.

4. Pantographe selon la revendication 1, dans lequel le rouleau électriquement conducteur monté de manière pivotante présente dans la zone de son centre un épaississement du diamètre.

5. Pantographe selon la revendication 1, dans lequel l'axe fixe est en acier.

6. Pantographe selon la revendication 1, dans lequel les alésages ou les buses sont réalisés en tant que microbuses percées au laser.

7. Pantographe selon l'une quelconque des revendications précédentes, dans lequel un entrefer est conçu entre une surface avant de rouleau et un support de rouleau qui est conçu de préférence en tant que fourche en forme de U, est minimisé par le biais de l'insertion de cales.

8. Pantographe selon l'une quelconque des revendications précédentes, dans lequel le mécanisme de levage est réalisé conformément au concept à un seul longeron.
